# EUROPÄISCHE PATENTSCHRIFT

(11) **EP 2 171 553 B1**
(45) Veröffentlichungstag und Bekanntmachung des Hinweises auf die Patenterteilung: **24.04.2013**
(21) Anmeldenummer: 08786019.3
(22) Anmeldetag: 10.07.2008
(51) Int. Cl.: G05B 19/042, G05B 19/05

(54) **VERFAHREN ZUM BEDIENEN EINES FELDGERÄTES DER AUTOMATISIERUNGSTECHNIK**
METHOD FOR CONTROLLING A FIELD DEVICE IN AUTOMATION ENGINEERING
PROCÉDÉ D'UTILISATION D'UN APPAREIL DE TERRAIN EN TECHNIQUE D'AUTOMATISATION

(30) Priorität: 25.07.2007 DE 102007035158
(43) Veröffentlichungstag der Anmeldung: 07.04.2010
(73) Patentinhaber: Endress+Hauser Flowtec AG, 4153 Reinach (CH)
(72) Erfinder: LEFEBVRE, Martine, F-68730 Blotzheim (FR)
(74) Vertreter: Andres, Angelika Maria
(86) Internationale Anmeldenummer: PCT/EP2008/058962
(87) Internationale Veröffentlichungsnummer: WO 2009/013140

(56) Entgegenhaltungen:
- WO-A-2004/042482

## Beschreibung

Die Erfindung betrifft ein Verfahren zum Bedienen eines Feldgerätes der Automatisierungstechnik gemäß dem Oberbegriff des Anspruchs 1.

In der Automatisierungstechnik (Prozessautomatisierung/Fabrikautomatisierung) werden vielfach Feldgeräte eingesetzt, die zur Erfassung und/oder Beeinflussung von Prozessvariablen dienen. Beispiele für derartige Feldgeräte sind Füllstandsmessgeräte, Massendurchflussmessgeräte, Druck- und Temperaturmessgeräte, pH- und Redoxpotential-Messgeräte, Leitfähigkeitsmessgeräte etc. für die Prozessautomatisierungstechnik, die als Sensoren die entsprechenden Prozessvariablen Füllstand, Durchfluss, Druck, Temperatur, pH-Wert bzw. Leitfähigkeitswert erfassen.

Zur Beeinflussung von Prozessvariablen dienen Aktoren, z. B. Ventile, die den Durchfluss einer Flüssigkeit in einem Rohrleitungsabschnitt steuern oder Pumpen, die den Füllstand in einem Behälter verändern.

Eine Vielzahl solcher Feldgeräte wird von der Firma Endress + Hauser® hergestellt und vertrieben.

Häufig sind Feldgeräte über Feldbussysteme (Profibus®, Foundation®-Fieldbus, HART® etc.) mit übergeordneten Einheiten verbunden. Diese übergeordneten Einheiten dienen zur Prozesssteuerung, Prozessvisualisierung, zum Bedienen der Feldgeräte und zum Anlagenmanagement (Asset-Management) mit entsprechenden Programmen.

Die Integration von Feldgeräten in solche Anwendungen erfolgt über Gerätebeschreibungen. Diese Gerätebeschreibungen werden von den Geräteherstellern bereitgestellt, damit die Anwendungen z. B. die Bedeutung der von den Feldgeräten gelieferten interpretieren können.

Es sind verschiedene Gerätebeschreibungen für die unterschiedlichen Feldbussysteme bekannt (HART-Gerätebeschreibungen, Fieldbus Foundation Gerätebeschreibungen, Profibus-Gerätebeschreibungen).

In Zusammenarbeit der Fieldbus Foundation (FF), der HART Communication Foundation (HCF) und der Profibus Nutzerorganisation (PNO) wurde eine elektronische Gerätebeschreibung (Electronic Device Description EDD) geschaffen, die in der Norm IEC 61804-2 definiert ist.

Zur Bedienung der Feldgeräte sind entsprechende Bedienprogramme (Bedientools) notwendig, die auf den übergeordneten Einheiten entweder eigenständig ablaufen (FieldCare Endress+Hauser, Pactware, AMS Fisher-Rosemount, PDM Siemens) oder aber auch in Leitsystem-Anwendungen (Siemens PCS7, ABB Symphony, Emerson Delta V) integriert sind.

Für eine komfortable Bedienung der Feldgeräte sind seit kurzem spezielle Gerätebeschreibungen, so genannte Geräte-DTMs (Device Type Manager), die den FDT (Field Device Tool) Spezifikationen entsprechen, erhältlich. Die als Industriestandard geltenden FDT-Spezifikationen wurden von der PNO (Profibus Nutzer Organisation) in Zusammenarbeit mit dem ZVEI (Zentralverband Elektrotechnik- und Elektroindustrie) entwickelt. Die aktuelle FDT-Spezifikation 1.2.1 inklusive dem Addendum für die Kommunikation "Foundation Fieldbus" ist über den ZVEI bzw. die PNO bzw. die FDT-Group erhältlich.

Viele Feldgerätehersteller liefern bereits für ihre Feldgeräte entsprechende Geräte-DTMs aus. Die Geräte-DTMs kapseln Funktionen und Variablen des jeweiligen Feldgeräts und bieten meist eine graphische Bedienoberfläche.

Die Geräte-DTMs sind Softwarekomponenten, die jedoch nicht alleine ablauffähig sind. Als Laufzeitumgebung benötigen die Geräte-DTMs eine Rahmenapplikation z. B. FieldCare der Fa. Endress+Hauser, die auch als FDT-Frame bezeichnet wird. Die Rahmenapplikation und die entsprechenden Geräte-DTMs stellen ein Bedienprogramm für Feldgeräte dar, das einen sehr komfortablen Zugriff auf Feldgeräte (z.B. Geräte-Parameter, Messwerte, Statusinformationen, etc.) sowie den Aufruf von speziellen Funktionen (z. B. Diagnose) ermöglicht.

Die Bereitstellung von Geräte-DTMs ist jedoch für den Feldgerätehersteller mit einem erheblichen Aufwand verbunden. Für den Fall, dass für einen Geräte-DTM der Programmcode neu geschrieben werden muss, kann dies je nach Komplexität des Feldgerätes eine Entwicklungszeit von mehreren Wochen in Anspruch nehmen.

Nach der Fertigstellung müssen die Geräte-DTMs aufwendig getestet werden, um sicher zu stellen, dass sie einwandfrei mit dem betreffenden Feldgerät bzw. Gerätetyp zusammenarbeiten und dessen Funktionalität richtig wiedergeben.

Diese Tests haben auch einen sicherheitsrelevanten Aspekt, da über Geräte-DTMs auch sicherheitskritische Parameter an Feldgeräten eingestellt werden können. Eine sichere und zuverlässige Bedienung ist eine wesentliche Anforderung bei der Entwicklung von Geräte-DTMs.

Wird die Gerätesoftware eines Feldgerätes geändert, so muss häufig auch der Geräte-DTM für das betreffende Feldgerät umgeschrieben werden, was zu einem weiteren Aufwand für den Feldgerätehersteller führt.

Bei der Entwicklung von Geräte-DTMs greifen die Feldgerätehersteller häufig auf bereits vorhandene Gerätebeschreibungen (z.B. HART DDs) zurück. Die Firma CodeWrights in Karlsruhe stellt Geräte-DTMs in großer Zahl auf der Basis von HART-DDs her. Komplexe Funktionalitäten (wie z. B. aufwendige Berechnungen für eine Gerätediagnose) können jedoch nicht mit Hilfe von HART-DDs nachgebildet werden. Diese Funktionalitäten fehlen folglich auch in den entsprechenden Geräte-DTMs. Sollen diese komplexen Funktionalitäten auch in die Geräte-DTMs integriert werden, ist eine aufwendige Überarbeitung der entsprechenden Programmcodes notwendig.

Eine wichtige Anforderung bei der Gerätebedienung ist die Offline-Bedienung. Hierbei ist ein Feldgerät, das bedient werden soll, entweder gar nicht physikalisch mit der übergeordneten Einheit auf der das Bedienprogramm abläuft verbunden oder aber es ist nicht von dem Bedienprogramm ansprechbar, weil es noch nicht in das Feldbussystem integriert ist. Trotzdem möchte der Anwender bereits Geräte-Parameter für dieses Feldgerät eingeben. Eine offlinie - Parametrienung nach dem Stand der Technik zeigt WO 2004/042482 A1.

Um eine vollständige Offline-Bedienung zu ermöglichen, ist ein sehr hoher Aufwand bei der Erstellung der Geräte-DTMs notwendig. In der Regel kann mit herkömmlichen Geräte-DTMs keine hundertprozentige Offline-Bedienung gewährleistet werden.

Aufgabe der vorliegenden Erfindung ist es, ein Verfahren zum Bedienen eines Feldgerätes der Automatisierungstechnik bereitzustellen, das die oben genannten Nachteile nicht aufweist, das insbesondere eine einfache und sichere Bedienung von Feldgeräten ermöglicht.

Gelöst wird diese Aufgabe durch die im Anspruch 1 angegebenen Verfahrensschritte.

Verschiedene Ausgestaltungen der Erfindung sind in den Unteransprüchen angegeben.

Die wesentliche Idee der Erfindung besteht darin, die bisher zum Bedienen von Feldgeräten eingesetzte Softwarekomponente (z. B. Geräte-DTMs) zweiteilig auszuführen, wobei zum einen eine Basissoftwarekomponente und zusätzlich eine Erweiterungssoftwarekomponente vorgesehen sind. Die Basissoftwarekomponente bietet nur wenige Funktionalitäten und läuft wie die bisher eingesetzten Softwarekomponenten in einer Rahmenapplikation ab. Sie ermöglicht das Lesen und Schreiben von Geräte-Parametern und stellt eine graphische Basis-Bedienoberfläche zur Verfügung. Zusätzlich ist eine Erweiterungssoftwarekomponente vorgesehen, die aus dem Programmcode der Gerätesoftware erzeugt wird und die eigentliche Bedienfunktionalität des Feldgerätes liefert.

In einer ersten Ausgestaltung der Erfindung liefert die Erweiterungssoftwarekomponente, die zur Darstellung auf der graphischen Basis-Bedienoberfläche benötigten Eigenschaften (properties) der Geräte-Parameter.

In einer Weiterentwicklung der Erfindung dient die Erweiterungssoftwarekomponente zur Berechnung von Menüstrukturen, die auf der graphischen Basis-Bedienoberfläche dargestellt werden.

Die Erfindung ist besonders für Bedienprogramme geeignet, die auf dem FDT-Standard basieren. In diesem Fall ist die Basissoftwarekomponente ein Geräte-DTM, der den FDT-Spezifikationen entspricht. Die Erweiterungssoftware ist als Windows DLL(Dynamic Link Library)-Datei ausgeführt. Um eine Konsistenz der Funktionalität des Gerätes und der Erweiterungssoftwarekomponente zu gewährleisten, wird bei jedem Lesen und Schreiben von Geräte-Parametern die entsprechenden Werte der Geräte-Parameter an die Erweiterungssoftwarekomponente übertragen.

Die wesentlichen Vorteile, die das erfindungsgemäße Verfahren bietet, sind darin zu sehen, dass zum Bedienen von Feldgeräten keine aufwendigen Softwarekomponenten mehr erzeugt werden müssen. Die Erweiterungssoftwarekomponente wird direkt aus dem Programmcode der Gerätesoftware erzeugt. Dadurch entsteht kein zusätzlicher Entwicklungsaufwand für die Erzeugung der Softwarekomponenten. Der Testaufwand wird auch erheblich verringert, da die gleiche Funktionalität gewährleistet ist, weil de Erweiterungssoftwarekomponente und die Gerätesoftware auf dem gleichen Programmcode basieren.

Nachfolgend ist die Erfindung anhand eines in der Zeichnung dargestellten Ausführungsbeispiels näher beschrieben.

Es zeigen:
Fig. 1 herkömmliche Bedienung eines Feldgerätes der Prozessautomatisierungstechnik mit einer Rechnereinheit;
Fig. 2 erfindungsgemäße Bedienung eines Feldgerätes der Prozessautomatisierungstechnik mit einer Rechnereinheit;
Fig. 3 schematische Darstellung des Schreibens von Geräte-Parameter;
Fig. 4 schematische Darstellung des Lesens von Geräte-Parametern;
Fig. 5 schematische Darstellung der Gerätesoftware und der DLL-Datei für ein Feldgerät;

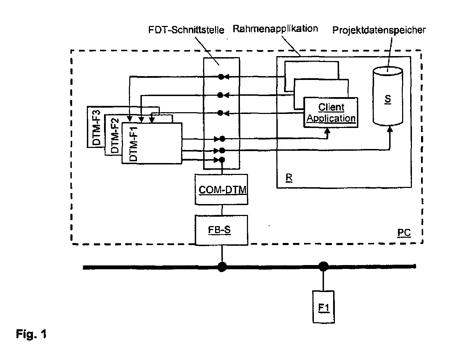

Fig. 1 zeigt schematisch die zur Bedienung eines Feldgerätes F1 notwendigen Komponenten. In der Regel erfolgt die Bedienung mit Hilfe einer Rechnereinheit RE. Bei der Rechnereinheit RE kann es sich z. B. um einen Personal Computer PC mit einem Windows Betriebssystem handeln. Die Rechnereinheit RE ist über eine Feldbusschnittstelle FB-S mit einem Feldbus FB verbunden, an den das Feldgerät F1 angeschlossen ist. Auf der Rechnereinheit RE läuft eine Rahmenapplikation R (z. B. FieldCare, Fa. Endress+Hauser), die über definierte Schnittstellen (FDT-Schnittstellen), mit einem dem Feldgerät F1 zugeordneten Geräte-DTM DTM-F1 kommuniziert. Weitere Geräte-DTMs DTM-F2 und DTM-F3 für nicht näher dargestellte Feldgeräte F2 und F3 sind zusätzlich eingezeichnet.

Über einen Kommunikations-DTM COM-DTM ist der Geräte-DTM DTM-F1 mit der Feldbusschnittstelle FB-S verbunden. Zur Bedienung des Feldgerätes F1 muss der Geräte-DTM für das betreffende Feldgerät in diesem Fall der Geräte-DTM DTM-F1 instanziiert werden. Für die Instanziierung ist die Rahmenapplikation R verantwortlich. Die Rahmenapplikation R ist auch für das Starten und Verwalten von Anwendungen (Client Applications), das Speichern und Laden von Projektdaten aus einem Projektdatenspeicher PS verantwortlich. Nachdem der Geräte-DTM DTM-F1 instanziiert ist, steht dem Anwender ein Bedienprogramm BE mit einer vom Geräte-DTM DTM-F1 gelieferten graphische Bedienoberfläche (graphical user interface) zum Bedienen des Feldgerätes F1 zur Verfügung. Neben der graphischen Bedienoberfläche (GUI) umfasst der Geräte-DTM DTM-F1 auch die Geschäftslogik (business logic) des Feldgerätes F1 zur Verfügung.

Über den Kommunikations-DTM COM-DTM kann eine Verbindung zum Feldgerät F1 aufgebaut werden, die ein Lesen und Schreiben von Geräte-Parametern ermöglicht wird.

Das Feldgerät F1 überträgt nur Parameterwerte und keine Eigenschaften dieser Werte, wie z. B. Textbeschreibungen wie "Volumenfluss", Formate, Einheiten oder Auswahlmenüs. Diese Eigenschaften müssen vom Geräte-DTM DTM-F1 geliefert werden und können dann auf der Bedienoberfläche dargestellt werden.

Die Bedienung einzelner Feldgeräte erfolgt mit Hilfe des Bedienprogramms BE, das auf der Rechnereinheit RE abläuft. Das Bedienprogramm BE besteht aus der Rahmenapplikation R und verschiedenen Geräte-DTMs als Softwarekomponenten. Die Geräte-DTMs zu den Feldgeräten kapseln deren Bedienfunktionalität.

Bei der Offline Bedienung ist z. B. das Feldgerät F1 physikalisch nicht vorhanden. Die Offline Bedienung erfolgt nur mit Hilfe des Geräte-DTMs DTM-F1.

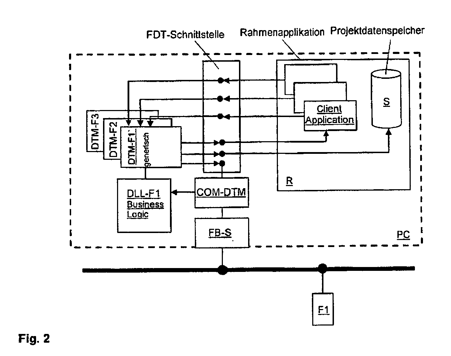

Fig. 2 entspricht bis auf den Geräte-DTM DTM-F1 identisch der Fig. 1.

Anstatt des Geräte-DTMs DTM-F1, ist ein Geräte-DTM DTM-F1' und eine zusätzliche Softwarekomponente DLL-F1 vorgesehen. Anstatt einer einteiligen Softwarekomponente wird hier eine zweigeteilte Softwarekomponente verwendet, die aus dem Geräte-DTM DTM-F1' als Basissoftwarekomponente und der zusätzlichen Softwarekomponente DLL-F1 als Erweiterungssoftwarekomponente besteht.

Mit Hilfe der Basissoftwarekomponente DTM-F1' können Geräte-Parameter des Feldgerätes F1 gelesen bzw. geschrieben werden. Damit ist u. a. auch eine Identifizierung des Feldgerätes F1 möglich, indem z. B. die Hersteller ID, die Geräte ID und die Software-Revision-Nummer ausgelesen werden. Nach der Identifizierung des Feldgerätes F1 kann in der Registry des Windows-Betriebs-Systems nach der Erweiterungssoftwarekomponente DLL-F1 des Feldgerätes F1 gesucht werden, um diese zu laden.

Die Basissoftwarekomponente DTM-F1' stellt außerdem eine Basis-Bedienoberfläche zur Verfügung. Da die Basissoftwarekomponente DTM-F1' nur eine minimale Funktionalität bereitstellt, könnte man sie auch als generischer Geräte-DTM bezeichnen.

Die DLL-F1 kommuniziert mit dem Geräte-DTM DTM-F1' und dem Kommunikations-DTM COM-DTM über interne Windows-Schnittstellen. Zum Bedienen des Feldgerätes F1 werden sowohl der Geräte-DTM DTM-F1' wie auch die DLL-F1 benötigt. Die eigentliche Bedienfunktionalität des Feldgerätes F1 wird dabei von der Erweiterungssoftwarekomponente DLL-F1 bereitgestellt. So liefert die DLL-F1 unter anderem Textbeschreibungen zu Geräte-Parametern, deren Format, deren Einheiten, sowie Auswahlmenüs. Man kann die DLL-F1 auch als Geschäftslogik (business logic) des Feldgerätes F1 ansehen. Über die Windows-Schnittstelle können alle darstellungsrelevanten Informationen von der Erweiterungssoftwarekomponente DLL-F1 abgefragt werden.

Ist das Feldgerät Online, so wird am Anfang der Bedienung ein Upload aller Geräte-Parameter durchgeführt. Dabei werden alle Geräte-Parameter, wie nachfolgend noch näher erläutert wird, gleichzeitig auch in die Erweiterungssoftwarekomponente DLL-F1 übertragen.

Ist das Feldgerät Offline, so stehen die aktuellen Geräte-Parameter nicht zur Verfügung.

Prinzipiell könnte auch zur Kommunikation mit der DLL-F1 ein virtueller COM-Port als Schnittstelle vorgesehen sein.

Sinnvoller ist es jedoch direkt auf die Erweiterungssoftwarekomponente DLL-F1 über den Application Layer dieses virtuellen Feldgerätes zuzugreifen.

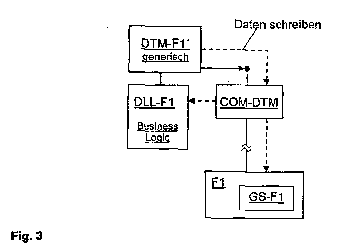

In Fig. 3 ist das Schreiben von Geräte-Parametern schematisch dargestellt. Erzeugt der Geräte-DTM DTM-F1' einen Schreibbefehl für einen Geräte-Parameter so wird dieser zusammen mit dem Wert des Geräte-Parameters über den Kommunikations- DTM COM-DTM an das Feldgerät F1 weiter geleitet und an die Gerätesoftware GS-F1 übergeben, die den Schreibbefehl ausführt. Der Kommunikations-DTM COM-DTM gibt diesen Schreibbefehl aber auch gleichzeitig an die DLL-F1 weiter, so dass der gleiche Geräte-Parameter auch in der DLL-F1 mit dem entsprechenden Wert geschrieben wird. Handelt es sich bei dem Geräte-Parameter um die Einheit, mit der der Messwert des Feldgerätes F1 ausgegeben wird, so wird diese Änderung sowohl im Feldgerät F1, wie auch in der DLL-F1 ausgeführt. Entsprechend werden die von dieser Einheit abhängigen Geräte-Parameter sowohl im Feldgerät F1 wie auch in der DLL-F1 geändert. Abhängige Geräte-Parameter können zum Beispiel Grenzwerte sein.

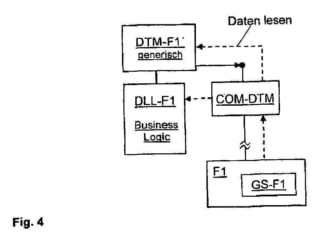

In Fig. 4 ist das Lesen von Geräte-Parametern schematisch dargestellt. Hier wird ein Lesebefehl an das Feldgerät F1 übertragen und der entsprechende Wert vom Feldgerät F1 über den Kommunikations-DTM COM-DTM an den generischen Geräte-DTM DTM-F1' weitergegeben. Auch diesem Fall wird der Wert des Geräte-Parameters an die DLL-F1 weitergegeben. Somit wird eine Konsistenz zwischen der Funktionalität des Feldgeräts F1 und der DLL-F1 gewährleistet.

Bei einer Offline Bedienung ist das Feldgerät F1 gemäß den Figuren 2-4 physikalisch nicht vorhanden. Das Schreiben und Lesen von Geräte-Parametern erfolgt nur zwischen Geräte-DTM DTM-F1' und der Erweiterungssoftwarekomponente DLL-F1.

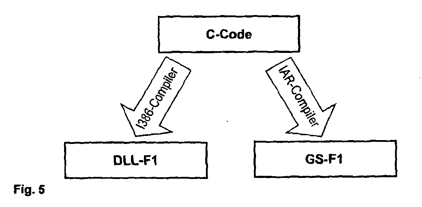

In Fig. 5 ist schematisch dargestellt, wie die DLL-F1 und die Gerätesoftware GS-F1 generiert werden. Beide werden vom gleichen Programmcode (C-Code) abgeleitet. Die DLL-F1 wird über einen Standard Intel I386-compiler gewonnen. Die Gerätesoftware GS-F1 über einen IAR-Compiler. In der Automatisierungstechnik wird die Gerätesoftware für viele Feldgeräte mit einem derartigen Compiler erzeugt.

Die wesentlichen Vorteile, die das erfindungsgemäße Verfahren bietet, sind darin zu sehen, dass zum Bedienen von Feldgeräten keine aufwendigen Softwarekomponenten (Geräte-DTMs) mehr erzeugt werden müssen. Die Erweiterungssoftwarekomponente DLL-F1' wird direkt aus dem Programmcode der Gerätesoftware GS generiert. Dadurch entsteht gar kein Programmieraufwand für die Erzeugung dieser Softwarekomponenten. Der Testaufwand wird auch erheblich verringert, da die gleiche Funktionalität automatisch gewährleistet ist, weil de Erweiterungssoftwarekomponente DLL-F1 und die Gerätesoftware GS auf dem gleichen Programmcode basieren. Damit ist auch ohne Aufwand eine 100% Offline Bedienung möglich.

Bei einer Änderung der Gerätesoftware muss nur der Programmcode (C bzw. C++ Code) zweimal mit den entsprechenden Compilern kompiliert werden.

Aufgrund dieser Vorteile ist das erfindungsgemäße Verfahren sehr kostengünstig.

Die Erfindung ist natürlich nicht nur für FDT-Schnittstellen geeignet, sondern auch für weiter Schnittstellen, wie das insbesondere für die Fertigungsindustrie vorgesehene TCI-Interface (Tool Calling Interface).

Die Erfindung eignet sich insbesondere auch für Pocket-PCs mit Windows CE als Betriebssystem.

## Patentansprüche

1. Verfahren zum Bedienen eines Feldgerätes (F1) der Automatisierungstechnik, das mit einer Rechnereinheit (RE), auf der ein Bedienprogramm (BE) für Feldgeräte abläuft, verbindbar ist,
wobei das Bedienprogramm (BE) aus einer Rahmenapplikation (R) und ausführbaren Softwarekomponenten, die Feldgeräten zugeordnet sind und deren Bedienfunktionalitäten kapseln, besteht,
wobei im Feldgerät (F1) eine Gerätesoftware (GS) ablauffähig ist,
**dadurch gekennzeichnet,**
**dass** die Softwarekomponente, die dem Feldgerät (F1) zugeordnet ist, zweigeteilt ist und aus einer Basissoftwarekomponente (DTM-F1') und einer Erweiterungssoftwarekomponente (DLL-F1) besteht,
wobei die Basissoftwarekomponente (DTM-F1') zum Lesen und Schreiben von Geräte-Parametern des Feldgeräts (F1) dient und eine graphische Basis-Bedienoberfläche zur Verfügung stellt und
wobei die Erweiterungssoftwarekomponente (DLL-F1) aus dem Programmcode der Gerätesoftware (GS) erzeugt wird und die Bedienfunktionalität des Feldgerätes (F1) liefert,
wobei es sich bei der Basissoftwarekomponente um einen Geräte-DTM (DTM-F1') handelt,
wobei ein vermittels des Geräte-DTM (DTM-F1') erzeugter Schreibbefehl für einen Geräte-Parameter zusammen mit dem Wert des Geräte-Parameters über einen Kommunikations-DTM (COM-DTM) an das Feldgerät weitergeleitet und an die Gerätesoftware (GS) übergeben wird, die den Schreibbefehl ausführt, wobei der Kommunikations-DTM den Schreibbefehl gleichzeitig an die Erweiterungssoftwarekomponente weitergibt, so dass der gleiche Geräte-Parameter auch in der Erweiterungssoftwarekomponente mit dem entsprechenden Wert des Geräte-Parameters geschrieben wird, wobei beim Lesen von Geräte-Parametern ein Lesebefehl an das Feldgerät (F1) übertragen und der entsprechende Wert vom Feldgerät (F1) über den Kommunikations-DTM (COM-DTM) an den generischen Geräte-DTM (DTM-F1') weitergegeben wird, und der Wert des Geräte-Parameters an die Erweiterungssoftwarekomponente (DLL-F1) weitergegeben wird.

2. Verfahren nach Anspruch 1, **dadurch gekennzeichnet, dass** bei einer Offline-Bedienung, das Schreiben und Lesen von Geräte-Parameter nur zwischen dem Geräte-DTM (DTM-F1') und der Erweiterungssoftwarekomponente (DLL-F1) erfolgt.

3. Verfahren nach Anspruch 1, **dadurch gekennzeichnet, dass** die Erweiterungssoftwarekomponente (DLL-F1) und die Gerätesoftware (GS) aus dem gleichen Programmcode abgeleitet werden, insbesondere wird die Erweiterungssoftwarekomponente (DLL-F1) über einen Intel I386-Compiler bzw. die Gerätesoftware (GS-F1) über einen IAR-Compiler gewonnen.

4. Verfahren nach Anspruch 1, **dadurch gekennzeichnet, dass** die Erweiterungssoftwarekomponente (DLL-F1) die zur Darstellung auf der graphischen Basis-Bedienoberfläche benötigten Eigenschaften der Geräte-Parameter liefert.

5. Verfahren nach Anspruch 4, **dadurch gekennzeichnet, dass** die Erweiterungssoftwarekomponente (DLL-F1) zur Berechnung von Menüstrukturen dient, die auf der graphischen Basis-Bedienoberfläche dargestellt werden.

6. Verfahren nach einem der Ansprüche 1, 4,5 **dadurch gekennzeichnet, dass** die Basis-Softwarekomponente (DTM-F1) ein Geräte-DTM der den FDT-Spezifikationen ist und die Erweiterungssoftware-Komponente (DLL-F1) eine Windows DLL-Datei ist.

7. Verfahren nach einem der vorhergehenden Ansprüche, **dadurch gekennzeichnet, dass** beim Lesen und Schreiben von Geräte-Parametern über die Basis-Softwarekomponente DTM-F1, die Werte der Geräte-Parameter an die Erweiterungs-Softwarekomponente DLL-F1 übertragen werden.

8. Verfahren nach einem der vorhergehenden Ansprüche, **dadurch gekennzeichnet, dass** der Programmcode für die Gerätesoftware in der Programmiersprache C oder C++ geschrieben ist.

## Claims

1. Procedure designed for operating a field device (F1) used in automation engineering which can be connected to a computer unit (RE) running an operating program (BE) for field devices,
wherein the operating program (BE) consists of a frame application (R) and executable software components that are assigned to field devices and encapsulate the operating functionalities,
wherein a device software (GS) is executable in the field device (F1),
**characterized in that**
the software component that is assigned to the field device (F1) is divided in two and consists of a basic software component (DTM-F1') and an extension software component (DLL-F1),
wherein the basic software component (DTM-F1') is used for reading and writing device parameters of the field device (F1) and makes a graphic basic user interface available, and
wherein the extension software component (DLL-F1) is generated from the program code of the device software (GS) and provides the operating functionality of the field device (F1),
wherein the basic software component is a device DTM (DTM-F1'),
wherein a write command for a device parameter, generated by means of the device DTM (DTM-F1'), is forwarded along with the value of the device parameter via a communication DTM (COM-DTM) to the field device and is passed on to the device software (GS) that executes the write command, wherein the communication DTM simultaneously passes the write command on to the extension software component so that the same device parameter is also written with the corresponding value of the device parameter in the extension software component,
wherein - when device parameters are read - a read command is transmitted to the field device (F1) and the corresponding value is transmitted from the field device (F1) to the generic device DTM (DTM-F1') via the communication DTM (COM-DTM) and the value of the device parameter is transmitted to the extension software component (DLL-F1).

2. Procedure as claimed in Claim 1, **characterized in that**, in the event of offline operation, device parameters are only written and read between the device DTM (DTM-F1') and the extension software component (DLL-F1).

3. Procedure as claimed in Claim 1, **characterized in that** the extension software component (DLL-F1) and the device software (GS) are derived from the same program code, and particularly the extension software component (DLL-F1) is compiled via an Intel i386 compiler and the device software (GS-F1) via an IAR compiler.

4. Procedure as claimed in Claim 1, **characterized in that** the extension software component (DLL-F1) supplies the properties of the device parameters that are required for display on the graphic basic user interface.

5. Procedure as claimed in Claim 4, **characterized in that** the extension software component (DLL-F1) serves to calculate menu structures that are displayed on the graphic basic user interface.

6. Procedure as claimed in one of the Claims 1, 4, 5, **characterized in that** the basic software component (DTM-F1) is a device DTM that complies with the FDT specifications and the extension software component (DLL-F1) is a Windows DLL file.

7. Procedure as claimed in one of the previous claims, **characterized in that** when device parameters are read and written via the basic software component DTM-F1, the values of the device parameters are transmitted to the extension software component DLL-F1.

8. Procedure as claimed in one of the previous claims, **characterized in that** the program code for the device software is written in the programming language C or C++.

## Revendications

1. Procédé destiné à la commande d'un appareil de terrain (F1) de la technique d'automatisation, lequel peut être relié avec une unité d'ordinateur (RE), sur laquelle est exécuté un programme d'exploitation (BE) pour les appareils de terrain,
pour lequel le programme d'exploitation (BE) est constitué d'une application cadre (R) et de composants logiciels exécutables, qui sont affectés aux appareils de terrain et encapsulent les fonctionnalités d'exploitation,
pour lequel un logiciel d'appareil (GS) est exécutable dans l'appareil de terrain (F1),
**caractérisé en ce**
**que** le composant logiciel, qui est affecté à l'appareil de terrain (F1), est divisé en deux et se compose d'un composant logiciel de base (DTM-F1') et d'un composant logiciel d'extension (DLL-F1),
pour lequel le composant logiciel de base (DTM-F1') est destiné à la lecture et à l'écriture des paramètres de l'appareil de terrain (F1) et met à disposition une interface utilisateur de base graphique et
pour lequel le composant logiciel d'extension (DLL-F1) génère à partir du code de programme le logiciel d'appareil (GS) et fournit la fonctionnalité d'exploitation de l'appareil de terrain (F1),
pour lequel le composant logiciel de base est un DTM d'appareil (DTM-F1') pour lequel une commande d'écriture pour un paramètre d'appareil, générée au moyen du DTM d'appareil (DTM-F1'), est retransmise conjointement avec la valeur du paramètre d'appareil par l'intermédiaire d'un DTM de communication (COM-DTM) à l'appareil de terrain et est délivrée au logiciel d'appareil (GS), qui exécute la commande d'écriture, le DTM de communication transmettant en même temps la commande d'écriture au composant logiciel d'extension, si bien que le même paramètre d'appareil est également écrit dans le composant logiciel d'extension avec la valeur correspondante du paramètre d'appareil, une commande de lecture étant transmise lors de la lecture des paramètres d'appareil à l'appareil de terrain (F1) et la valeur correspondante étant retransmise depuis l'appareil de terrain (F1) par le biais du DTM de communication (COM-DTM) au DTM d'appareil (DTM-F1') générique, et la valeur du paramètre d'appareil étant retransmise au composant logiciel d'extension (DLL-F1).

2. Procédé selon la revendication 1, **caractérisé en ce qu'**en cas d'utilisation hors ligne, l'écriture et la lecture de paramètres d'appareil a lieu uniquement entre le DTM d'appareil (DTM-F1') et le composant logiciel d'extension (DLL-F1).

3. Procédé selon la revendication 1, **caractérisé en ce que** le composant logiciel d'extension (DLL-F1) et le logiciel d'appareil (GS) sont dérivés du même code de programme, notamment le composant logiciel d'extension (DLL-F1) est compilé au moyen d'un compilateur Intel i386 et le logiciel d'appareil (GS-F1) au moyen d'un compilateur IAR.

4. Procédé selon la revendication 1, **caractérisé en ce que** le composant logiciel d'extension (DLL-F1) fournit les propriétés des paramètres d'appareil nécessaires pour la représentation sur l'interface utilisateur de base graphique.

5. Procédé selon la revendication 4, **caractérisé en ce que** le composant logiciel d'extension (DLL-F1) sert au calcul de structures de menu, qui sont représentées sur l'interface utilisateur de base graphique.

6. Procédé selon l'une des revendications 4, 5, **caractérisé en ce que** le composant logiciel de base (DTM-F1) est un DTM d'appareil conforme aux spécifications FDT et **en ce que** le composant logiciel d'extension (DLL-F1) est un fichier DLL Windows.

7. Procédé selon l'une des revendications précédentes, **caractérisé en ce que**, lors de la lecture et de l'écriture de paramètres d'appareil par le biais du composant logiciel de base DTM-F1, les valeurs des paramètres d'appareil sont transmis au composant logiciel d'extension DLL-F1.

8. Procédé selon l'une des revendications précédentes, **caractérisé en ce que** le code de programme pour le logiciel d'appareil est écrit en langage de programmation C ou C++.
